# EUROPÄISCHE PATENTANMELDUNG

(11) **EP 0 766 987 A1**
(43) Veröffentlichungstag der Anmeldung: **09.04.1997**
(21) Anmeldenummer: 95112943.6
(22) Anmeldetag: 17.08.1995
(51) Int. Cl.: B01D 29/15, B01D 29/62

(54) **Beutelfiltersiebkorb und -gehäuse**

(71) Anmelder: Petra Mayer Filtertechnik, 54518 Platten (DE)
(72) Erfinder: Wagener, Dirk, 55756 Herrstein (DE)

(57) **Zusammenfassung**

Die Erfindung wurde getätigt auf dem Gebiet der Fest-Flüssig Trennung, welche auch als Filtration bezeichnet wird.

Das Fachgebiet ist der Maschinen- und Anlagenbau bzw. der Behälterbau.

Überall in der Chemie, Pharmacie und Lebensmittebranche in denen ein Trennprozeß nötig ist, findet die Erfindung Anwendung.

Die Erfindung löst einige verfahrenstechnische Probleme der Filtration (Untergruppe Beutelfiltration) durch Umkehrung der Anströmungsrichtung.

In bis dato eingesetzten Beutelgehäusen wird der Filterbeutel von innen angeströmt, und gibt das Filtrat nach außen ab, solange bis der Beutel mit Feststoff gefüllt ist, und kein Filtratdurchsatz mehr möglich ist.

Anschließendes Öffnen des Gehäuses und manuelles Entnehmen des Filtermediums gestalten sich aufgrund des Feststoffgewichts und der Emissionsbelastungen schwierig.

Das Öffnen des Gehäuses und das Entnehmen des Beutels kann durch die Freispülleitung nun entfallen, da mit Hilfe eines Spüldruckes der Feststoff ausgetragen wird, welches zudem die Standzeit des Filtermediums verlängert.

Auch die Feststoffaufnahmekapazität ist nicht mehr auf das Beutelinnenvolumen beschränkt, sondern nutzt das zur Verfügung stehende Kesselvolumen.

Die Erfindung löst einige konstruktiven Gehäuseprobleme von Beutelgehäusen. Indem auf aufwendige Deckel- und Anströmungskonstruktionen verzichtet werden kann
Die Erfindung ist vielseitig einsetzbar.

D.h. der Beutelfiltersiebkorb kann in alle Filtergehäuse ( Nutsche, Kerze- und Modulgehäuse) eingesetzt werden, da die Verriegelungsadaption nach den Gehäusevorgaben wählbar ist.

## Beschreibung

Die Erfindung betrifft ein Beutelfiltersiebkorb, sowie ein dazugehörendes Gehäuse.

Beutelfiltersiebkorb als in ein Filtergerät einbaufertige Einheit, mit Aufgabenstellung der Beutelfiltration mit Hilfe eines aufgezogenen Filterbeutel. Wobei ein Stützmantel in Form eines Lochbleches mit bevorzugt runden Öffnungen, geformt als Zylinderteil mit einem Abschluß als Bodenteil in Form eines Bodens, bevorzugt in Klöpperform oder als Blechbiegeteil geformten Kegelabschluß das System kennzeichnen.

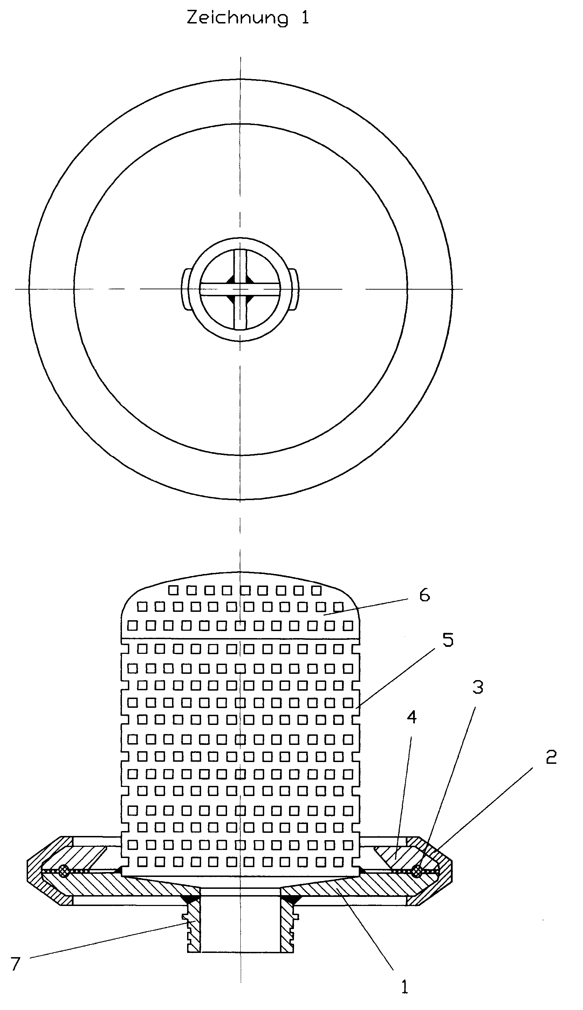

### Siehe hierzu Zeichnung 1.

Der Stützmantel wirkt entgegen den vorhandenen Systemen der Fest-Flüssig-Trennung der Firmen Gaf, Löffler etc. nicht als Beutelinnenhalter sondern als Beutelaußenhalter. Vgl. hierzu benanntes Prospektmaterial.

Die vorhandenen Apparate der Innenbeutelfassung gestaltet sich dahingehend, daß Filterbeutel als Filtermedium in einen Siebkorb gesteckt werden, oben abgedichtet, oben verriegelt und von oben mit Unfiltrat angeströmt, nach außen das Filtrat abgebend durch den Siebkorb strömend das Filtrat außerhalb des Siebkorbs in eine Sammelleitung abgebend, solange bis zurückgehaltener Feststoff das Beutelinnenvolumen ausgefüllt hat, eine Verblockung auftritt, und die Filtration abbricht.

Ein wesentlicher Vorteil gegenüber den bekannten Systemen besteht darin, daß die Erfindung auf dem umgekehrten Verfahrensprinzip der Flußrichtung funktioniert. Der Filterbeutel wird von außen über den Siebkorb gestülpt, unten am Siebkorbboden verriegelt und abgedichtet, von außen mit Unfiltrat angeströmt, nach innen in den Siebkorbzylinder das Filtrat abgebend nach unten in eine Ausgangsöffnung das Filtrat abströmend. Bei höheren Drücken wird über das Filtermedium eine Lochblechdoppelhülle aufgespannt. Ein weiterer Vorteil ist, daß eine Verblockung des Beutels viel später auftritt, da die Aufnahmekapazität um ein Vielfaches gesteigert wurde, da das Gesamtvolumen zwischen Siebkorbaußenmantel und Behälterinnenmantel als Trubraum zur Verfügung steht.

Die Verblockung tritt hingegen dem alten System nicht schon nach dem Erreichen der Beutelvolumenkapazität auf, sondern erst bei Feststoffüllung des Kesselinnenraumes bis zur Beuteloberkante.

Ein weiterer Vorteil des Beutelsiebkorbs ist schließlich die komplette Herausnahmemöglichkeit samt geklemmten Filterbeutel zum Reinigen. Es kann die gesamte Einsatzeinheit in eine seperate Reinigungsflüssigkeit gelegt werden, und nach der Regeneration erneut ohne Beutelverbrauch in das Gehäuse eingesetzt werden. Bei den vorhandenen Systemen müssen die gefüllten Beutel nach der Filtration einzeln manuell herausgehoben werden, welches ein Nachteil darstellt, da bei einer Filterverblockungen unfiltriertes Produkt im Beutelinnern bleibt. Das unfiltrierte Produkt ist somit verloren und muß entsorgt werden, bzw. manuell aus dem alten Beutel in einen neuen Beutel gepreßt werden. Bei Vollastfüllung der Beutel müssen hohe Gewichte aus dem Gehäuse gehoben werden. Die Erfindung ermöglicht durch die Gegenflußrichtung der Beutelanströmung auch ein leichteres Handling bzgl. der Beutelentnahme. Dies geschieht vorzugsweise durch die einzeln zu entnehmenden Siebkörbe, welche hierbei nicht mit Feststoff aufgefüllt sind, und somit nur ein Bruchteil des zu entnehmenden Gewichts des früheren Systems darstellen. Produktverluste treten nicht auf, da eine Verblockung durch Verlegung der Beutelfilterfläche durch die Gehäusekonstruktion nicht in Betracht kommt, da auf der Geräteseite eine Freispülleitung vorhanden ist, welche den Feststoff aus dem Gehäuse spült.

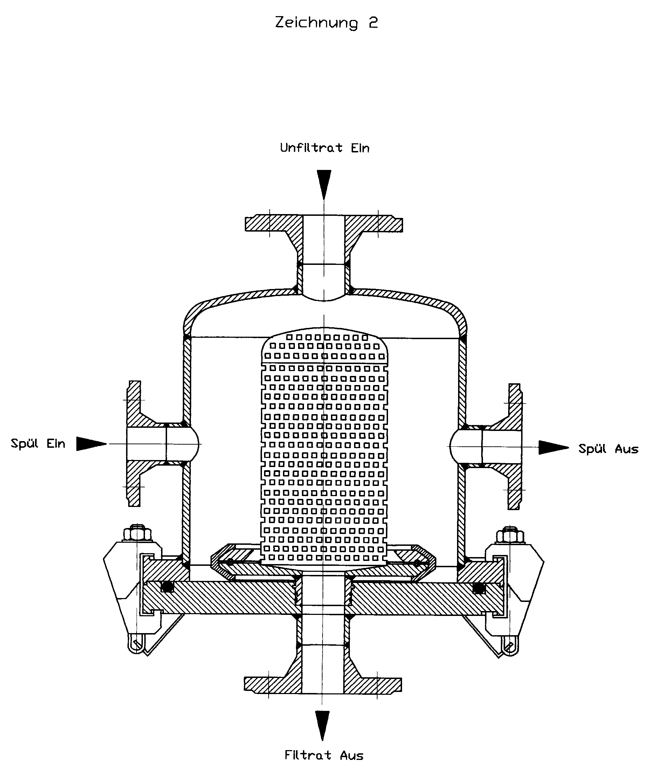

### Siehe hierzu Zeichnung 2.

Die Freispüleinrichtung ist Filtergeräteseitig ebenfalls ein Kernstück der Erfindung, da es nun gelingt höhere Feststoffmengen über geringere Filterflächen zu filtrieren, welches dann Kleinere Filtereinheiten mit weniger Beuteln bedeutet.

Solche Frei- oder Rückspüleinrichtungen sind bei den vorhandenen Systemen mit Beutelinnenanströmung nicht bekannt, da hier eine Rückspülung zu keiner Verlängerung der Filterstandzeit führt, da Feststoff direkt nachrückt, und die Filterverlegung nicht aufgehoben werden kann.

Das System der Erfindung eine sogenannte Freispüleinrichtung funktioniert mittels einer Kreislauffahrt, welche Feststoffe in ein seperates Überströmungsgefäß fördert, in dessen Volumen sich der ausgeströmte Feststoff absetzt, und die partikelgeringbelastete Flüssigkeit weiter im Kreislauf den Spülzyklus fahren kann, und das Filter weiter von Feststoff ausspült.

Zur Spülzyklusfahrt wird die Unfiltrateingangsseite des Filters und die Filtratausgangsseite geschlossen. Die versetzt angebrachten Spülein- und Spülausgänge werden geöffnet. Da der steigende Druck die feuchte Feststoffmasse zum Verlassen des Behälters zwingt, wählt die Masse den Weg aus der auf der gegenüberliegenden Seite geöffneten Spülausgang.

Hierbei ist die kurzzeitige Unterbrechung der Filtration nötig, um den Feststoff austragen zu können. Es genügt um die Filtration fortführen zu können einer geringen Spülzeit, welche sich nach den Gegebenheiten der Feststoffmenge, und / oder Restchargenmenge richtet.

Eine am Gerät montierte Pumpe kann nach Umschaltung die Förderarbeit sowohl des Unfiltrats zur Filtration als auch des Unfiltrats (oder Reinigungsflüssigkeit) zur Freispülkreislauffahrt ermöglichen. Die bevorzugte Ausführungsform der Anschlüsse von der Freispüleinrichtung sind Vorschweißflansche nach DIN 2633. Die Anordnung erfolgt vorzugsweise auf Achse zu den Ein- und Ausgangsproduktanschlüssen. Die Anschlüsse des Unfiltratein- und Filtratausgangs bevorzugt Vorschweißflansche nach DIN 2633. Die Anordnung des Unfiltrateingangs bevorzugt die Haubendeckelanordnung, da hierdurch Spüleffekte auftreten, welche die Feststoffmenge kontinuierlich nach unten drücken, und somit bewirken, daß eine Filterflächenverlegung hinausgezögert wird. Als Verriegelungsart des Beutelsiebkorbs wird eine Clampverbindung bevorzugt. Die Clampverbindung dichtet die an den Beuteln vorhandene Dichtkante durch eine bevorzugt angeordnete Schräge an einem Flansch ab. Der Gegenflansch ist mit dem gelochten Zylinderteil fest verbunden, und hat einen Ausgangsstutzen welcher die Verriegelungsadaption für den Gehäuseboden hat.

Die Adaption bevorzugt eine Bajonettverriegelung mit Doppel-O-ring Abdichtung.

Die Bajonettverriegelung bevorzugt 2 hervorstehende Nasen, welche in eine Einfräsung gehäuseseitig eingreifen und mittels Umdrehung manuell verriegelt werden. Der Einbau des Beutelsiebkorbeinsatzes in vorhandene Filtergehäuse nutzt deren Adaption und Abdichtungsart, welches zu den bekannten Systemen ebenfalls eine Neuerung darstellt. Sind bei vorhandenen Gehäusetypen zylindrische Aufnahmen ohne Verriegelungsmöglichkeiten vorhanden, kommt eine Haltestange zum Einsatz, die im oberen Bereich den Beutelsiebkorb hält, um in Gegenrichtung wirkende Druckstöße zu neutralisieren.

Die Größe des Beutelsiebkorbeinsatzes ist variabel ausgelegt. Es können auch Filtergewebetücher eingespannt werden.

Die Verbindung von Gehäuseunter und - Oberteil richtet sich nach AD-Regelwerk, wobei eine Klammerschraubenverriegelung bevorzugt wird.

Da die Erfindung nicht an bestimmte Betriebsdrücke gebunden ist, da zur Filtration die Differenzdruckwerte entscheidend sind, können alle üblichen Druckstufen vorgesehen werden.

Ferner sind zur Druck-, Temperatur- und/oder Füllstandsmessung verschiedene Armaturanschlüsse am Gehäuse möglich, bevorzugt werden Vorschweißflansche nach DIN 2633.

Als Werkstoff des Beutelfiltersiebkorbs und des Gehäuses wird Edelstahl der Werkstoffnr.: 1.4404 bevorzugt. Als Oberflächenbearbeitung wird die gebeizte Ausführung bevorzugt.

Das Filtergehäuse des Beutelfilter unterliegt je nach Druck-Liter-Verhältnis der TÜV-Bauartprüfüng und der TÜV-Abnahme.

## Patentansprüche

1. Beutelfiltersiebkorb als ein in ein Beutelfiltersiebkorbgehäuse einbaufertige System als Einzel- oder als Mehrzahleinsatz.
Zur Bestückung mit Filterbeutel als Verbrauchsmedium einer Fest-Flüssig-Trennung.
Beutel von außen über den Siebkorb gestülpt, unten am Siebkorbboden verriegelt und abgedichtet, von außen mit Unfiltrat angeströmt, nach innen in den Siebkorbzylinder
das Filtrat abgebend, nach unten in eine Ausgangsöffnung das Filtrat abströmend.

2. Beutelfiltersiebkorb als in ein beliebiges Filtergerät einbaufertige Einheit.

3. Beutelfiltersiebkorbgehäuse zur Aufnahme von einem oder mehreren Beutelfiltersiebkörben als Wechseleinsatz. Gekennzeichnet dadurch, daß im Gehäuseboden vorzugsweise Bajonettaufnahmen mit Abdichtungskanten angebracht sind, und Freispüleinrichtungen vorhanden sind, daß mittels Kreislauffahrt die Feststoffe in ein seperates Überstandsgefäß gefördert, m dessen Volumen sich der ausgeströmte Feststoff absetzen kann. Gehäuse weiter gekennzeichnet durch eine einteilig abnehmbare Haube, bevorzugte Ausführung mit einer Auffagwanne und je einem Ein- und Ausgangsanschluß sowie Überströmungsanschlüssen.

4. Beutelfiltersiebkorb nach Anspruch 1 oder 2, dadurch gekennzeichnet, daß der untere Flansch (1) und der obere Flansch (4) durch ein Verbindungsteil (2) befestigt und mit einer Dichtung (3) zusätzlich abgedichtet werden kann.

5. Beutelfiltersiebkorb nach Anspruch 4 dadurch gekennzeichnet, daß ein gelochtes Zylinderteil (5) mit einem Anschlußteil (6) verbunden ist, und zusammen mit dem unteren Flansch (1) verbunden ist.

6. Beutelfiltersiebkorb nach Anspruch 5 dadurch gekennzeichnet, daß die Gehäuseaufnahme sich als Gegenstück (7) an dem Beutelfiltersiebkorb befindet, und diese mit dem unteren Flansch (1) verbunden ist.
